# EUROPEAN PATENT APPLICATION

(11) **EP 3 112 324 A1**
(43) Date of publication of application: **04.01.2017**
(21) Application number: 15755770.3
(22) Date of filing: 24.02.2015
(51) Int. Cl.: C03B 33/04, C03B 33/033, B60J 1/00

(54) **METHOD AND APPARATUS FOR PROCESSING GLASS SHEET**

(30) Priority: 25.02.2014 JP 2014034744; 14.03.2014 JP 2014052821
(71) Applicant: Bando Kiko Co., Ltd, Tokushima-shi, Tokushima 770-0871 (JP)
(72) Inventor: FUNAKI, Akira, Tokushima-shi Tokushima 770-0871 (JP); SHIMAMURA, Munekazu, Tokushima-shi Tokushima 770-0871 (JP)
(74) Representative: Jackson, Martin Peter
(86) International application number: PCT/JP2015/000930
(87) International publication number: WO 2015/129252

(57) **Abstract**

A glass plate working apparatus 1 includes: a cutter wheel 11 for scribe forming on an upper surface 16 of a glass plate 2 a scribe groove line 9 which is constituted by a closed curved and is directed in a thickness direction of the glass plate 2 in such a manner as to be inclined toward an inner region of the closed curved; a pressing mechanism for pressing an outer region of the closed curved on the glass plate 2 from a side of the upper surface 16 of the glass plate 2; and a removing mechanism 81 for sucking and lifting the inner region of the closed curved on the glass plate 2 from the side of the upper surface 16 of the glass plate 2 to bend the glass plate 2 in an upwardly protruding manner and allow a scribe groove to reach a lower surface of the glass plate 2, and removing the inner region of the scribe groove line 9.

## Description

### TECHNICAL FIELD

The present invention relates to a method and an apparatus for cutting out and forming an opening (hole) in an inner region of a glass plate, more particularly to a glass plate working method and working apparatus for cutting out and forming an opening for a sunroof window in a ceiling region of a windshield (panoramic roof glass plate) serving as both a windshield and a ceiling in an automobile, and a working method and a working apparatus for cutting out and forming an opening in an inner region of a glass plate for a side window in an automobile.

### BACKGROUND ART

Patent Document 1 discloses a manufacturing method in which the formation of an opening in a glass plate for an automobile is performed by cutting out using a pressurized water jet.

Patent Document 2 discloses a glass plate cutting method for cutting out from a glass plate a glass substrate for a magnetic disk or an optical disk, wherein a cutter wheel whose left and right edge angles are different with respect to a wheel ridgeline is moved in a state of being set uprightly on the glass plate surface, or a cutter wheel whose left and right edge angles are identical with respect to the wheel ridgeline is moved in a state of being inclined on the glass plate surface, so as to form a scribe groove line which is inclined with respect to the thickness direction of the glass plate and is constituted by a closed curve, and wherein, following the formation of the scribe groove line, the glass plate is deformed by heating the glass plate surface, and the scribe groove line is caused to proceed in the thickness direction by this deformation, and wherein a portion of the glass plate surrounded by the scribe groove line is subsequently separated.

### PRIOR ART DOCUMENTS

### PATENT DOCUMENTS

Patent Document 1: JP-T-2012-519642
Patent Document 2: JP-A-1995-223828

### SUMMARY OF THE INVENTION

### PROBLEMS THAT THE INVENTION IS TO SOLVE

Incidentally, in the manufacturing method described in Patent Document 1, since the cutting out and formation of an opening in the glass plate is performed by a pressurized water jet, the cutting speed of the glass plate is slow, and much time is required until the completion of the cutting out of the opening, so that the efficiency is very poor.

In the cutting method described in Patent Document 2, since the glass plate is heated, much time is required in the separation of the opening of the glass plate in the same way as the manufacturing method described in Patent Document 1, and the efficiency is also very poor.

An object of the present invention is to provide a glass plate working method and working apparatus which are capable of forming an opening in an inner region of a glass plate speedily and with good quality.

Another object of the present invention is to provide a glass plate working method and working apparatus which are capable of continuously manufacturing glass plates with an opening formed therein.

### MEANS FOR SOLVING THE PROBLEMS

A glass plate working method in accordance with the present invention comprises the steps of: scribe forming on one surface of a glass plate a scribe groove line which is constituted by a closed curved and is directed in a thickness direction of the glass plate in such a manner as to be inclined toward an inner region of the closed curved; and in a state in which an outer region of the closed curved on the glass plate is pressed from a side of the one surface of the glass plate, sucking and lifting the inner region of the closed curved on the glass plate from the side of the one surface of the glass plate to bend the glass plate in an upwardly protruding manner and allow a scribe groove to reach another surface of the glass plate, and removing the inner region of the scribe groove line.

In such a glass plate working method in accordance with the present invention, the lifting of the glass plate from the one surface of the glass plate may be effected by NC control.

A glass plate working apparatus in accordance with the present invention comprises: a cutter wheel for scribe forming on one surface of a glass plate a scribe groove line which is constituted by a closed curved and is directed in a thickness direction of the glass plate in such a manner as to be inclined toward an inner region of the closed curved; a pressing mechanism for pressing an outer region of the closed curved on the glass plate from a side of the one surface of the glass plate; and a removing mechanism for sucking and lifting the inner region of the closed curved on the glass plate from the side of the one surface of the glass plate to bend the glass plate in an upwardly protruding manner and allow a scribe groove to reach another surface of the glass plate, and removing the inner region of the scribe groove line.

In addition, in the glass plate working apparatus in accordance with the present invention, the removing mechanism may include a suction pad for sucking the inner region of the scribe groove line and an NC controlled motor for effecting the lifting movement of the suction pad under NC control.

### ADVANTAGES OF THE INVENTION

According to the present invention, it is possible to provide a glass plate working method and working apparatus which are capable of forming an opening in an inner region of a glass plate speedily and with good quality.

In addition, according to the present invention, it is possible to provide a glass plate working method and working apparatus which are capable of continuously manufacturing glass plates with an opening formed therein.

### BRIEF DESCRIPTION OF THE DRAWINGS

Fig. 1 is an explanatory plan view of a glass plate (product) with an opening formed therein;
Fig. 2 is an explanatory plan view of a glass plate with a scribe groove line for the formation of an opening formed therein;
Fig. 3 is an explanatory diagram of the posture of a cutter wheel during scribing using a cutter wheel whose left and right edge angles are identical;
Fig. 4 is an explanatory diagram of the posture of a cutter wheel during scribing using a cutter wheel whose left and right edge angles are different;
Fig. 5 is an explanatory cross-sectional view of the scribe groove line formed on the glass plate;
Fig. 6 is a diagram for explaining the operation of cutting out and removing an inner region of the scribe groove line;
Fig. 7 is a diagram for explaining a state in which the inner region of the scribe groove line has been removed;
Fig. 8 is an explanatory front elevational view of a glass plate working apparatus in accordance with the present invention;
Fig. 9 is an explanatory front cross-sectional view of the glass plate working apparatus in accordance with the present invention;
Fig. 10 is an explanatory side cross-sectional view of a scribing position in a case where a cutter wheel whose left and right edge angles are identical with respect to an ridgeline is used;
Fig. 11 is an explanatory side cross-sectional view of the scribing position in the case where the cutter wheel whose left and right edge angles are identical with respect to the ridgeline is used;
Fig. 12 is an explanatory side cross-sectional view of a removing position;
Fig. 13 is an explanatory side cross-sectional view of the removing position;
Fig. 14 is an explanatory side cross-sectional view of the removing position;
Fig. 15 is an explanatory side cross-sectional view of a grinding position;
Fig. 16 is an explanatory side cross-sectional view of the scribing position in the case where the cutter wheel whose left and right edge angles are different with respect to the ridgeline is used; and
Fig. 17 is an explanatory plan view of the removing position.

### MODE FOR CARRYING OUT THE INVENTION

Hereafter, a description will be given of a preferred illustrative embodiment of the present invention with reference to the drawings.

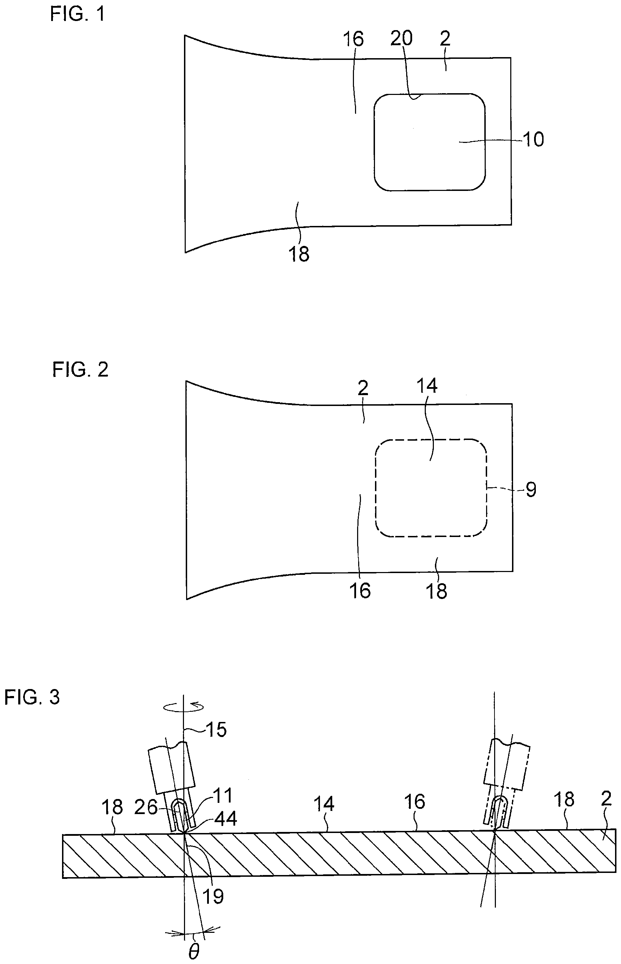

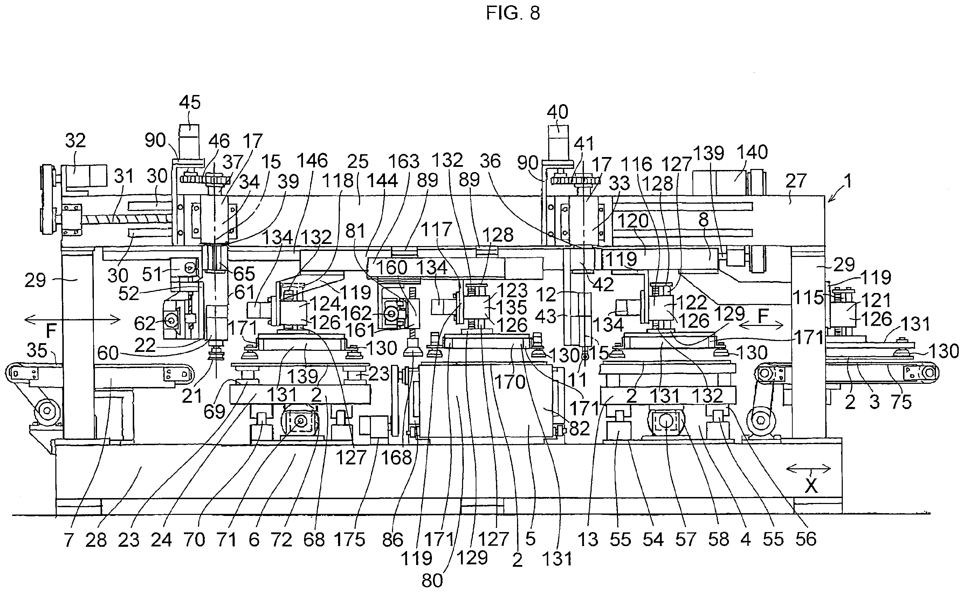

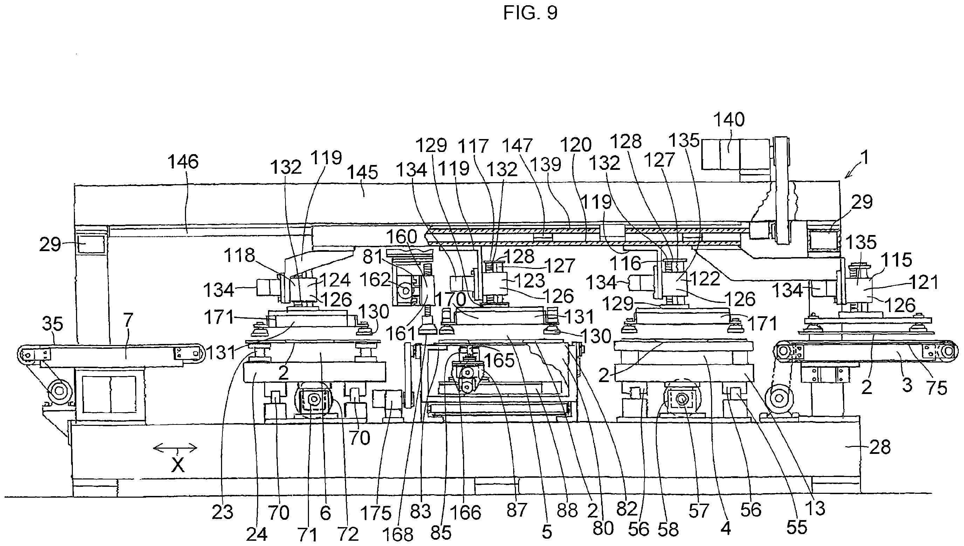

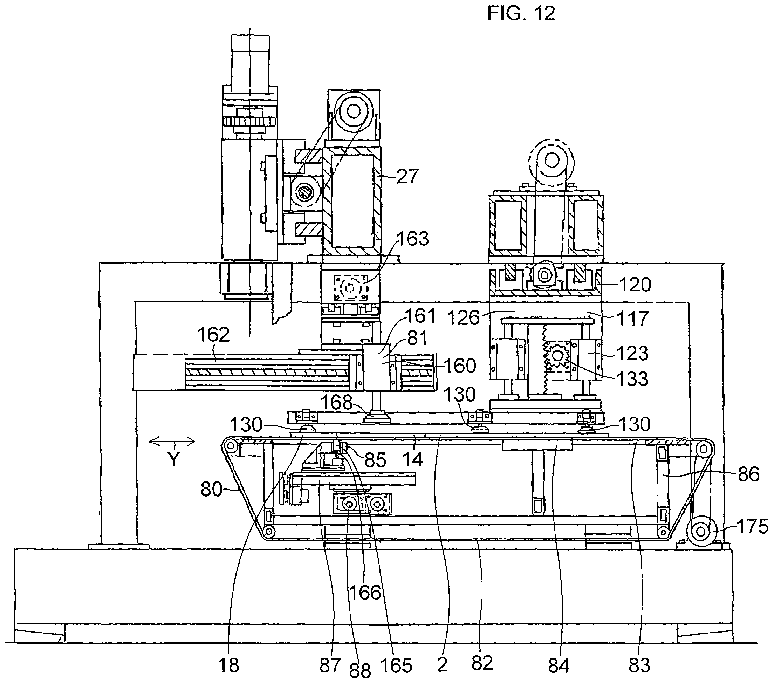

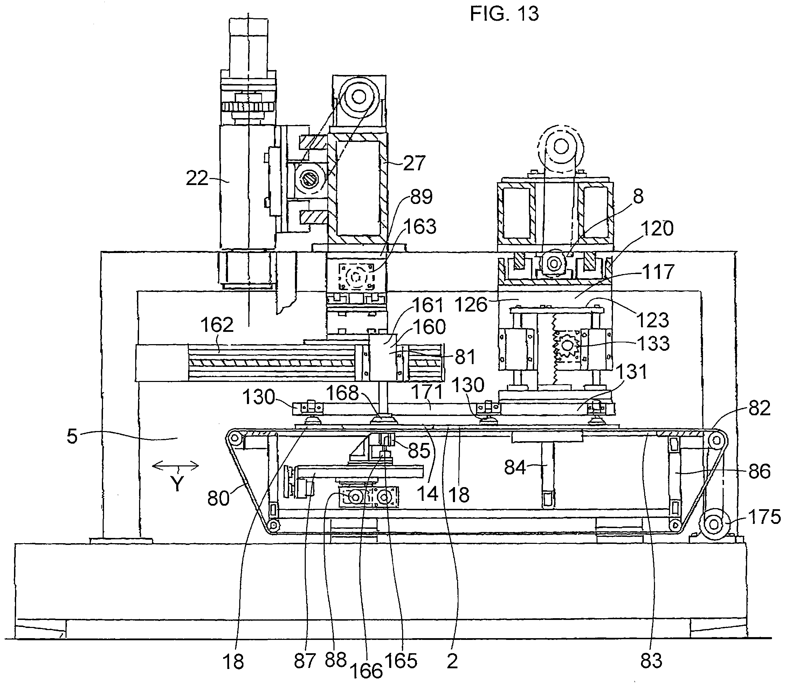

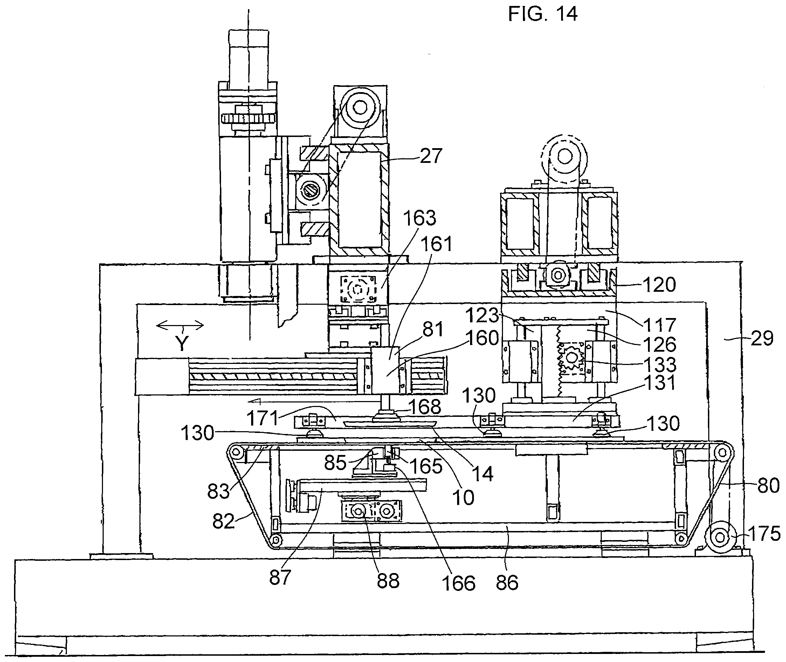

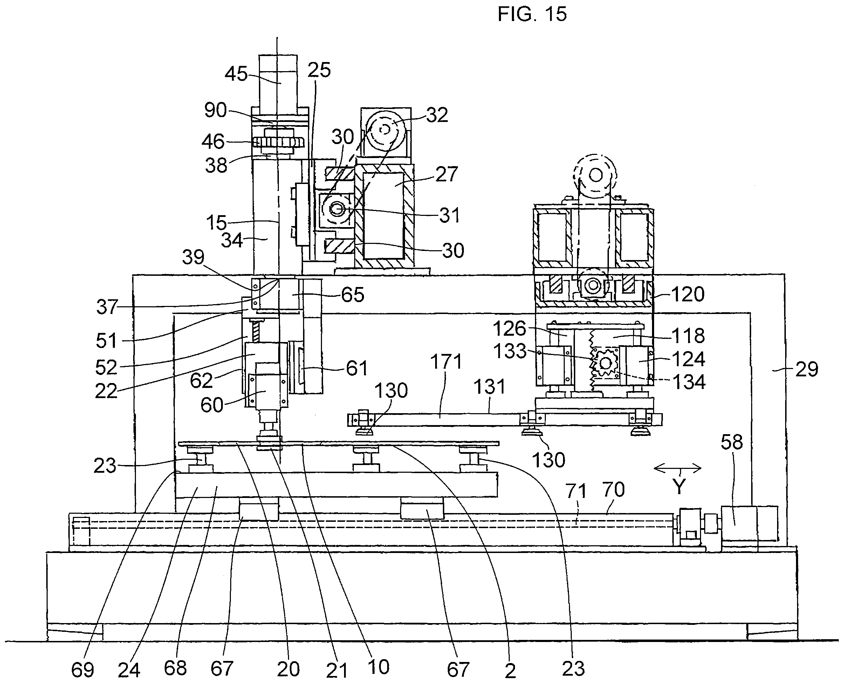

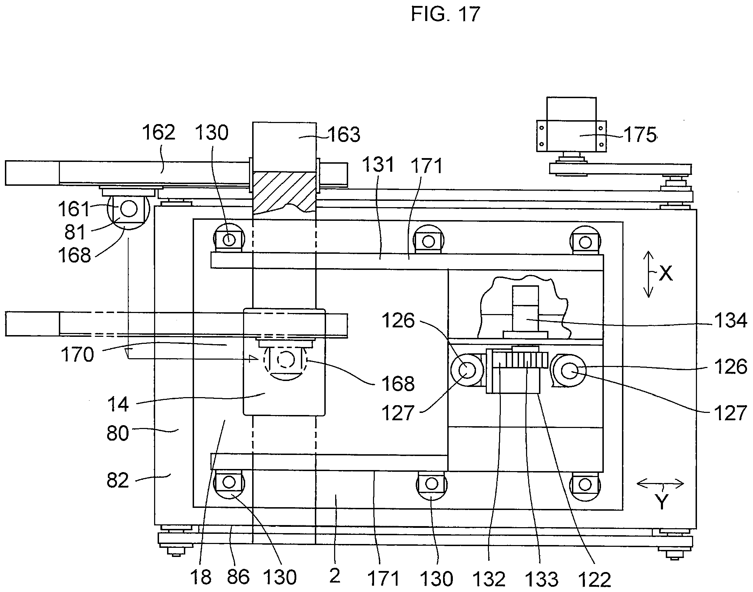

In Figs. 1 to 17, in a glass plate working apparatus 1 in accordance with this embodiment, a carrying-in position 3 for a glass plate 2, a scribing position 4, a removing position 5, a grinding position 6, and a discharging position 7 are arranged at equal intervals linearly along an X-axis, i.e., a left-right direction F in Fig. 8, and a transporting device 8 for transporting the glass plate 2 is provided above these positions in such a manner as to extend in parallel with the X-axis.

The transporting device 8 is disposed in such a manner as to extend linearly above a carrying-in conveyor 75 in the carrying-in position 3, above a scribing worktable 13 in the scribing position 4, above a belt conveyor device 80 in the removing position 5, above a grinding worktable 24 in the grinding position 6, and above a conveyor 35 in the discharging position 7. This transporting device 8 is adapted to transfer onto the scribing worktable 13 the glass plate 2 carried in onto and placed on the carrying-in conveyor 75, to transfer onto an endless belt 82 of the belt conveyor device 80 the glass plate 2 placed on the scribing worktable 13 and on which a scribe groove line 9 constituted by a closed curve has been formed, to cause the glass plate 2 placed on the endless belt 82 and having an opening 10 formed therein to be transferred onto a plurality of suction pads 23 arranged on an upper surface 69 of a table body 68 by being detachably sucked thereonto, and to transfer onto the conveyor 35 the glass plate 2 placed on the suction pads 23 and on which an inner edge 20 defining the opening 10 has been ground, respectively.

In the carrying-in position 3, after the glass plate 2 is positioned on the carrying-in conveyor 75, the glass plate 2 is set on standby for being carried into the scribing position 4. In the scribing position 4, the scribe groove line 9 constituted by a closed curve is formed on the glass plate 2 by being scribed along the configuration of the opening 10 to be formed. In the removing position 5, an inner region 14 surrounded by the scribe groove line 9 of the closed curve formed in the scribing position 4 is removed upwardly to form the opening 10 in the glass plate 2. In the grinding position 6, the inner edge 20 of the opening 10 formed in the removing position 5 is ground. In the discharging position 7, the working finished glass plate 2 is discharged to outside the apparatus by the conveyor 35.

The transporting device 8 transports the glass plates 2 while the glass plates 2 are being replaced between the positions by repeating reciprocating linear movement over each distance between, for instance, the scribing position 4 and the removing position 5, i.e., from the carrying-in position 3 to the scribing position 4, from the scribing position 4 to the removing position 5, from the removing position 5 to the grinding position 6, and from the grinding position 6 to the discharging position 7.

The glass plate working apparatus 1 is further provided with an NC device (not shown) for NC controlling the formation of the scribe groove line 9 on the glass plate 2 in the scribing position 4, the removing action in the removing position 5, the grinding of the inner edge 20 of the opening 10 formed in the glass plate 2 at the grinding position 6, and the reciprocating linear movement of the transporting device 8.

In the scribing position 4, a scribe head 12 having a cutter wheel 11 at a lower end thereof and mounted on an X-axis moving base 25 and the scribing worktable 13 for planarly supporting the glass plate 2 are disposed. In the grinding position 6, a grinding head 22 having a grinding wheel 21 at a lower end thereof and mounted on the X-axis moving base 25 and the grinding worktable 24 for sucking and holding the glass plate 2 are disposed. The plurality of suction pads 23 for directly sucking and holding the glass plate 2 are disposed on the upper surface of the grinding worktable 24, and the scribe head 12 and the grinding head 22 are mounted on the common X-axis moving base 25 through an angle controlling means 17.

A mount 27 is installed on a pair of upright portal frames 29 on front and rear sides of a machine base 28 in such a manner as to extend linearly above the scribing position 4, the removing position 5, and the grinding position 6. The following are provided on the mount 27: two guide rails 30 laid in parallel to the X-axis; the X-axis moving base 25 which is linearly movable along the X-axis through slide blocks assembled to the guide rails 30 movably with respect to the guide rails 30; a feed screw 31 disposed between the guide rails 30 and coupled to the X-axis moving base 25 by means of a nut; and an X-axis servo motor 32 coupled to one end of the feed screw 31 by means of a toothed belt and a pulley. The X-axis moving base 25 is adapted to undergo movement in the X-axis direction, i.e., X-axis movement, by being NC controlled by the X-axis servo motor 32.

On the front surface of the X-axis moving base 25, a bearing unit 33 is mounted at a position corresponding to the scribing position 4, and a bearing unit 34 is mounted at a position corresponding to the grinding position 6. A rotating shaft 36 held by a bearing (not shown) is rotatably supported in the bearing unit 33, while a rotating shaft 37 held by a bearing (not shown) is rotatably supported in the bearing unit 34. The rotating shafts 36 and 37 are respectively supported by the bearing units 33 and 34 with rotational axes 15 thereof set perpendicularly to an upper surface 16 of the glass plate 2, and are adapted to undergo angularly controlled rotation about the rotational axis 15 perpendicular to the upper surface 16 of the glass plate 2. On the rotating shaft 36, the scribe head 12 is mounted at a lower end portion 39 thereof via a clamp bracket 42 and a bracket body 43, and an angle controlling motor 40 is coupled to an upper end 38 thereof via a pair of mutually meshing spur gears 41. On the rotating shaft 37, the grinding head 22 is mounted at a lower end portion 39 thereof via a clamp bracket 65, while an angle controlling motor 45 is coupled to the upper end 38 thereof via a pair of mutually meshing spur gears 46.

Each of the angle controlling motors 40 and 45 of the angle controlling means 17 is held by a bracket 90 provided uprightly on the front surface of the X-axis moving base 25. Upon receiving angularly controlled rotational drive from the angle controlling motors 40 and 45, the respective rotating shafts 36 and 37 cause the scribe head 12 and the grinding head 22 mounted at the respective lower end portions 39 to rotate under angular control about the rotational axis 15 perpendicular to the upper surface 16 of the glass plate 2. Thus, the angle controlling motors 40 and 45 which are driven under synchronous control synchronously effect the angularly controlled rotation of the scribe head 12 and the grinding head 22.

The scribe head 12 includes a spline shaft 47 having the cutter wheel 11 at a lower end thereof, a head body 48 for holding the spline shaft 47 reciprocatingly linearly movably in the vertical direction without rotating the spline shaft 47, an air cylinder unit 49 which is mounted on an upper portion of the head body 48 and is adapted to pneumatically resiliently press the cutter wheel 11 against the glass plate 2 when scribing is effected on the glass plate 2 by raising and lowering the cutter wheel 11 by the reciprocating linear movement of the spline shaft 47, and a base 50 on which the head body 48 is mounted such that the position is freely adjustable in the X-direction and the Y-direction.

The scribe head 12 is moved along the X-axis in a state in which the cutter wheel 11 is resiliently pressed against the surface of the glass plate 2 as the spline shaft 47 is pushed by the air cylinder unit 49 in the formation of the scribe groove line 9 on the upper surface 16 of the glass plate 2.

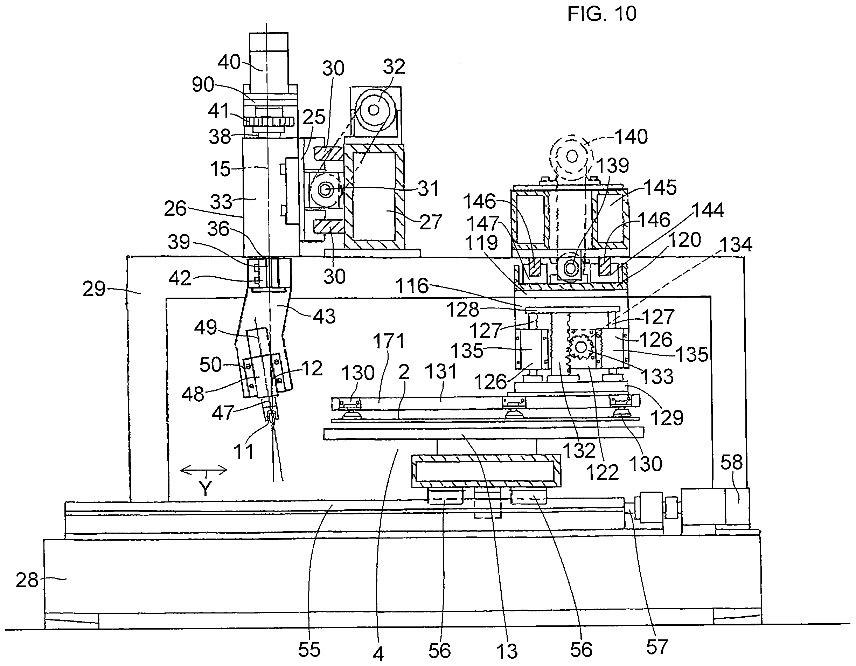

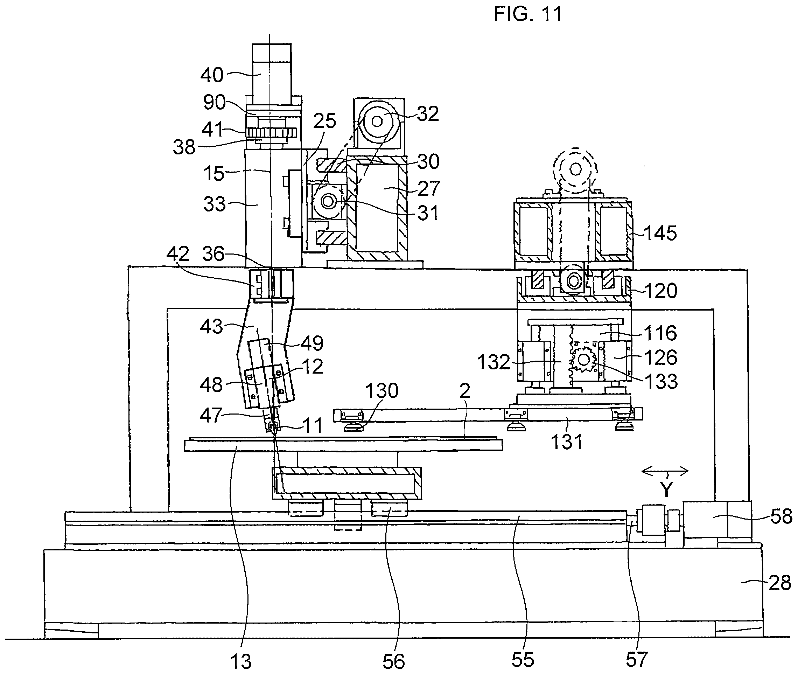

In cases where the cutter wheel 11 whose left and right edge angles are identical is used as shown in Fig. 3, the scribe head 12 is mounted on the bracket body 43 by means of the base 50 of the head body 48 in a posture inclined to the upper surface 16 of the glass plate 2 such that a blade edge 26 of the cutter wheel 11 is oriented to the inner region 14 surrounded by the scribe groove line 9, and such that a scribe point 44 of the cutter wheel 11 provided at a lower end thereof is positioned on the rotational axis 15 of the rotating axis 36, as shown in Figs. 10 and 11.

In the cutter wheel 11 in the case where the scribe head 12 is mounted in the posture inclined toward the inner region 14 of the scribe groove line 9, an one blade surface thereof is in a state of being in contact with the upper surface 16 of the glass plate 2 in the posture inclined toward the inner region 14 of the scribe groove line 9.

If the glass plate 2 is scribed by the preprogrammed movement of the cutter wheel 11 inclined toward the inner region 14, an inclined scribe groove line 9 is formed on the upper surface 16 of the glass plate 2, and a crack 19 is constantly formed in such a manner as to be inclined obliquely downwardly toward the inner region 14 of the scribe groove line 9 on the basis of the formation of the scribe groove line 9.

In a case where the diameter of the cutter wheel 11 is 5 mm and the blade edge angle is 154° to 160°, the range of an inclination angle θ of the cutter wheel 11 with respect to the rotational axis 15 is 1° to 10°, most preferably 6.5°.

The mounting structure of the scribe head 12 onto the bracket body 43 is such that the inclination angle θ can be freely changed and set.

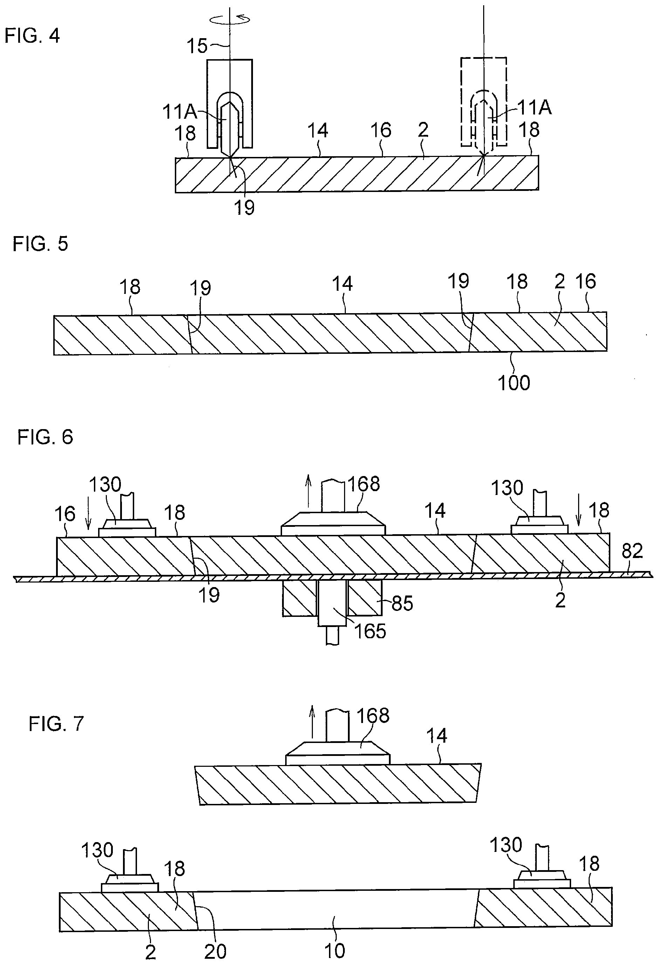

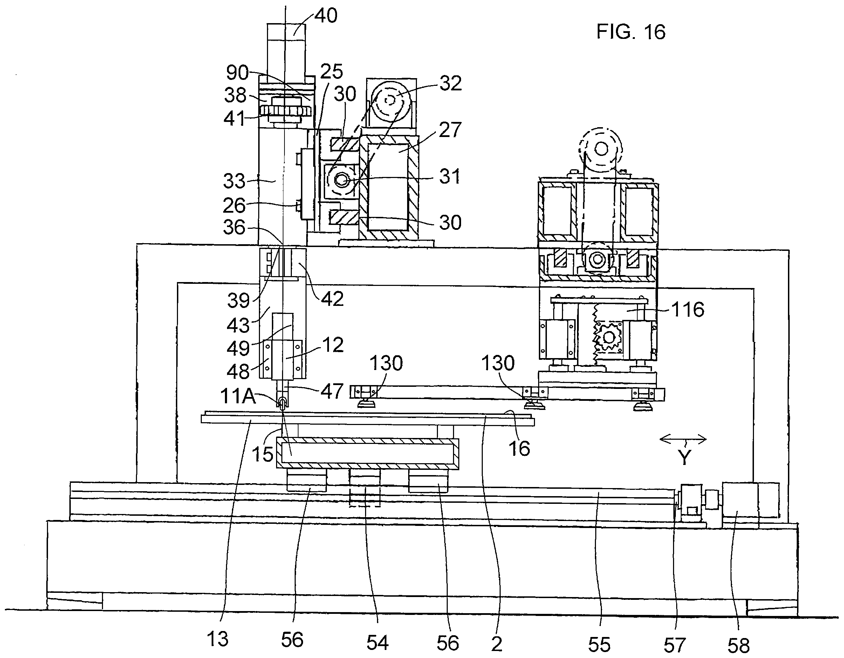

In cases where a cutter wheel 11A whose left and right edge angles are different, is provided on a lower end of the scribe head 12, as shown in Fig. 4, the scribe head 12 is mounted on the bracket body 43 in a posture perpendicular to the upper surface 16 of the glass plate 2 such that a plane passing through an annular ridgeline of the blade of the cutter wheel 11A is perpendicular to the upper surface 16 of the glass plate 2, and such that the blade surface with a smaller edge angle is oriented to the inner region 14 of the scribe groove line 9, as shown in Fig. 16.

The scribing worktable 13 corresponding to the scribe head 12 is mounted on a slide device 54 which is disposed on the upper surface of the machine base 28 along a Y-axis direction perpendicular to the X-axis and parallel to the upper surface 16 of the glass plate 2. The slide device 54 has a pair of guide rails 55 and a pair of slide blocks 56 respectively assembled to the guide rails 55 movably in the Y-axis direction. The scribing worktable 13 is mounted on the slide blocks 56, and the movement in the Y-axis direction, i.e., the Y-axis movement, of the scribing worktable 13 is effected by a feed screw 57 provided between the guide rails 55 and by a Y-axis control motor 58 connected to the feed screw 57.

Thus, the cutter wheel 11 or 11A is adapted to form the scribe groove line 9 on the glass plate 2 through the numerically controlled X-axis movement of the X-axis moving base 25, the numerically controlled Y-axis movement of the scribing worktable 13, and the numerically controlled angularly-controlled rotation of the scribe head 12.

The grinding head 22 includes a spindle motor 60 having the grinding wheel 21, as well as an X-direction slide unit 61 and a Y-direction slide unit 62 for holding the spindle motor 60 and finely adjusting the movement of the spindle motor 60 and, hence, the grinding wheel 21 in the X-axis direction and the Y-axis direction. The grinding head 22 is mounted on the lower portion 39 of the rotating shaft 37 by means of the clamp bracket 65 in the X-direction slide unit 61.

The grinding head 22 is adapted to be set and adjusted such that the grinding work point of the grinding wheel 21 with respect to the glass plate 2 is positioned on the rotational axis 15 of the rotating shaft 37. The angle controlling motor 45 is adapted to rotatively drive the rotating shaft 37 under angular control so as to rotate under angular control the grinding head 22 about the rotational axis 15 perpendicular to the X-Y plane to thereby effect grinding work by positioning the rotational center of the grinding wheel 21 at the grinding work point of the grinding wheel 21 with respect to the glass plate 2.

The grinding wheel 21 is so adapted that a peripheral end face (grinding surface) thereof is aligned with the rotational axis 15 of the rotating shaft 37 by the adjustment of the X-axis slide device 61 of a position adjusting means.

A motor unit 51 is adapted to change over the height position of the grinding head 22 and, hence, the grinding wheel 21 by vertically moving a vertical slide device 52 for setting the vertical position of the grinding head 22, and is adapted to adjust the grinding wheel 21 to the height of the glass plate 2 when performing the grinding work of the inner edge 20 of the opening 10.

In the grinding position 6, the grinding worktable 24 for effecting Y-axis movement while planarly sucking and holding the glass plate 2 on an upper surface thereof is disposed on the machine base 28 in correspondence with the grinding head 22 having the grinding wheel 21 to effect X-axis movement.

The grinding worktable 24 has the table body 68 and the plurality of suction pads 23 arranged on the upper surface 69 of the table body 68 by being detachably sucked thereonto. The table body 68 is mounted, via slide blocks 67, on a pair of guide rails 70 laid on the upper surface of the machine base 28 along the Y-axis direction, so as to be movable in the Y-axis direction. A feed screw 71, which is coupled to a Y-axis controlling motor 72 and coupled to the table body 68 via a nut in such a manner as to extend along the guide rails 70, is rotatably provided on the upper surface of the machine base 28. The Y-axis movement of the grinding worktable 24, which is synchronized with the Y-axis movement of the scribing worktable 13, is adapted to be effected by the rotation of the feed screw 71 based on the numerically controlled drive of the Y-axis controlling motor 72.

Thus, the grinding wheel 21 is adapted to effect the grinding work of the inner edge 20 of the opening 10 through the numerically controlled X-axis movement of the X-axis moving base 25, the numerically controlled Y-axis movement of the grinding worktable 24 synchronized with the Y-axis movement of the scribing worktable 13, and the numerically controlled angularly-controlled rotation of the grinding head 22 synchronized with the angularly controlled rotation of the scribe head 12.

In the removing position 5, there are provided the belt conveyor device 80 including the flexible endless belt 82 wound therearound and having an upper surface on which the glass plate 2 carried in from the scribing position 4 by the transporting device 8 is placed, as well as an electric motor 175 for causing the endless belt 82 to travel; and an inner region removing device 81 which is moved over the belt conveyor device 80 to the position of the inner region 14 of the scribe groove line 9 of the closed curve formed on the glass plate 2. The peripheral edge portion of the endless belt 82 which supports the placed glass plate 2 on the upper side is supported by a support 83 disposed on the lower surface of that peripheral edge portion, and an inner region portion of the endless belt 82 surrounded by the support 83 is adapted to be supported from the lower surface thereof by a support 84 fixed below that inner region and the transporting device 8 and by a support 85 which undergoes X-Y plane movement in the range where the scribe groove line 9 on the placed glass plate 2 is formed. The supports 83 and 84 are fixed to and supported by a conveyor frame 86 installed on the machine base 28.

A pusher 165 which is surrounded by the support 85 and is liftable is connected to an air cylinder unit 166 and is adapted to be raised and lowered by the air cylinder unit 166. The support 85 and the air cylinder unit 166 are provided on a Y-direction moving means 87 disposed therebelow, and the Y-direction moving means 87 installed on an X-direction moving means 88 is adapted to be moved in the Y-direction as the support 85 and the air cylinder unit 166 are numerically controlled by an NC device, and is adapted to be moved under NC control in the X-direction by the X-direction moving means 88.

The inner region removing device 81 includes a suction device 161 which has a numeral control motor 160 and a suction pad 168 connected to the numerical control motor 160, so as to vertically move the suction pad 168 by the NC controlled numeral control motor 160; a Y-direction moving means 162 for moving the suction device 161 in the Y-direction under NC control; and an X-direction moving means 163 for moving the Y-direction moving means 162 in the X-direction under NC control, the inner region removing device 81 being installed on the mount 27 by means of a fixture 89 at the X-direction moving means 163.

In the removing position 5, the glass plate 2 is placed on the upper surface of the endless belt 82 by a glass plate lifting device 117, suction pads 130 of the glass plate lifting device 117 are arranged at positions above the outer region 18 of the scribe groove line 9, and the glass plate 2 placed on the upper surface of the endless belt 82 is supported via the endless belt 82 by the support 84 and by the support 85 and the pusher 165 which have been moved to below the scribe groove line 9 in the inner region 14. In this state, the pusher 165 is raised by 1 mm to 2mm, and the support 85 and the pusher 165 are moved along the scribe groove line 9 while being pushed upwardly underneath the scribe groove line 9 via the endless belt 82 below, to thereby prompt the proceeding of a crack of the scribe groove line 9. Next, the pusher 165 is lowered, and the support 85 and the pusher 165 are positioned in the center of the inner region 14 of the glass plate 2 with upper surfaces of the support 85 and the pusher 165 set flush with each other, while the suction pads 130 of the transporting device 8 are lowered to downwardly press the outer region 18 of the glass plate 2 so as to allow the vertical crack 19 to proceed further by bending the glass plate 2 upwardly in a protruding manner. In this state, the suction pad 168 of the inner region removing device 81 is lowered to such the inner region 14 of the glass plate 2 by the suction pad 168, and the inner region removing device 81 is made to effect the repeated movement of gentle lifting/lowering under suction by several millimeters or thereabouts of the NC controlled inner region 14 by means of the suction pad 168, to thereby cause the vertical crack 19 to proceed in the glass plate 2 to an opposing surface (lower surface) 100 to the upper surface. Subsequently, the inner region 14 is separated and removed upwardly from the outer region 18 by the suction pad 168, and after the upward separation and removal of the inner region 14, the outer region 18 (for product use) of the glass plate 2 is sucked and raised by the suction pads 130 of the transporting device 8, and the outer region 18 is moved to the ensuing work position. After the outer region 18 (for product use) has been moved to the ensuing work position, the inner region 14 which has been upwardly separated and removed by the suction pad 168 is placed on the endless belt 82 as a cullet as the suction pad 168 is lowered, and the inner region 14 serving as the cullet is adapted to be discharged to outside the removing position 5 as the endless belt 82 is caused to travel by the operation of the electric motor 175.

The suction pad 168 is connected to an air sucking/releasing device (not shown) for effecting the suction and release of the glass plate 2 in synchronism with the raising and lowering thereof. The air sucking/releasing device causes the suction pad 168 to effect the sucking and holding of the glass plate 2 by the suction of air for the suction pad 168 and effect the releasing of suction and holding by the releasing of air for the suction pad 168.

The transporting device 8 for transporting the glass plate 2 has a reciprocally moving base 120 which repeats reciprocating movement in parallel with the X-axis above the carrying-in position 3, the scribing position 4, the removing position 5, and the grinding position 6, and the following are provided on the reciprocally moving base 120 by means of respective brackets 119 in correspondence with the respective work positions: a glass plate lifting device 115 in correspondence with the carrying-in position 3, a glass plate lifting device 116 in correspondence with the scribing position 4, the glass plate lifting device 117 in correspondence with the removing position 5, and a glass plate lifting device 118 in correspondence with the grinding position 6. The glass plate lifting devices 115, 116, 117, and 118, which are provided on the reciprocally moving base 120 and are integrally reciprocated by the reciprocating movement of the reciprocally moving base 120 in the X-axis direction, are respectively provided with lifting devices 121, 122, 123, and 124.

Each of the lifting devices 121, 122, 123, and 124 includes a pair of slide devices 126 disposed on a vertical portion of the respective bracket 119; a pair of connectors 128 and 129 for respectively connecting upper end portions and lower end portions of respective slide shafts 127 of the pair of slide devices 126; a support frame 131 mounted on the lower surface of the connector 129; the plurality of suction pads 130 mounted on the support frame 131; a rack 132 provided uprightly between the connectors 128 and 129; a pinion gear 133 meshing with the rack 132; and a servo motor 134 which has an output rotating shaft with the pinion fitted thereon and rotates the pinion gear 133 as the output rotating shaft rotates.

Each of the slide devices 126 has a slide bush body 135 mounted on the vertical portion of the bracket 119 and the slide shaft 127 which vertically slides inside the slide bush body 135, and the servo motor 134 to the output rotating shaft of which the pinion gear 133 is fitted is mounted on the bracket 119.

Each of the lifting devices 121, 122, 123, and 124 is so arranged that as the servo motor 134 is driven, the pinion gear 133 is rotated, the rack 132 meshing with the pinion gear 133 is raised or lowered by this rotation, and as the rack 132 is raised or lowered, the connector 129 with the rack 132 mounted thereon, the support frame 131 mounted on the connector 129, and, hence, the suction pads 130 are raised or lowered. In the transfer of the glass plate 2 from each of the carrying-in position 3, the scribing position 4, the removing position 5, and the grinding position 6 to the respective ensuing one of the scribing position 4, the removing position 5, the grinding position 6, and the discharging position 7, as the support frame 131 is lowered, the respective suction pads 130 are adapted to suck and hold the glass plate 2 by air suction in contact with the upper surface 16 of the glass plate 2 on the carrying-in conveyor 75, the scribing worktable 13, the endless belt 82, and the suction pad 23, respectively. As the suction pads 130 are raised by the raising of the support frame 131, the glass plate 2 is adapted to be lifted up by the suction pads 130 at the upper surface 16 of the glass plate 2. In the lowering of the support frame 131 after the arrival of the suction pads 130 sucking and holding the glass plate 2 to each of the scribing position 4, the removing position 5, grinding position 6, and the discharging position 7 in the ensuing stage by the operation of the transporting device 8, the suction pads 130 sucking and holding the glass plate 2 are adapted to release the suction and holding of the glass plate 2 so as to deliver the glass plate 2 to each of the scribing worktable 13, the endless belt 82, the suction pad 23 of the grinding worktable 24, and the conveyor 35. As the support frame 131 is raised after the delivery, the suction pads 130 are disposed above each of the scribing worktable 13, the endless belt 82, the suction pad 23, and the conveyor 35, and is subsequently returned to each of the carrying-in position 3, the scribing position 4, the removing position 5, and the grinding position 6 by the operation of the transporting device 8.

In the same way as the suction pad 168, each of the suction pads 130 is connected to an air sucking/releasing device (not shown) for effecting the suction and release of the glass plate 2 in synchronism with the raising and lowering of the support frame 131. The air sucking/releasing device causes the suction pad 130 to effect the sucking and holding of the glass plate 2 by the suction of air for the suction pad 130 and effect the releasing of suction and holding by the releasing of air for the suction pad 130.

In addition, the support frame 131 is formed in a U-shape by including a pair of support frame portions 171 which are located in the outer region 18 of the scribe groove line 9 or the opening 10 formed in the glass plate 2 when the suction pads 130 press and suck the glass plate 2 by the lowering of the support frame 131, and which extend in the Y-axis direction in parallel with each other and allow the scribe groove line 9 or the opening 10 to be located therebetween in the X-axis direction so that the suction pad 168 can move above the inner region 14; and an opening 170 between one distal end portions of the pair of support frame portions 171. The suction pads 130 are mounted on side surfaces of the support frame portions 171, and the suction pad 168 is adapted to be upwardly movable in and outside the inner region 14 through the opening 170.

The reciprocally moving base 120 is mounted on a lower surface of a mount 145, which is installed on the pair of frames 29, via a slide device 144 installed in parallel in the X-axis direction, and the slide device 144 includes a pair of rail bodies 146 mounted in parallel with each other and a pair of slide blocks 147 each fitted to the rail body 146 movably in the X-axis direction, the reciprocally moving base 120 being mounted on the slide blocks 147. A feed screw 139 disposed between the pair of rail bodies 146 is rotatably provided on the mount 145, and a transport control motor 140 connected to the feed screw 139 is fixedly provided on the mount 145. The reciprocally moving base 120 is adapted to be reciprocated under NC control by the rotation of the feed screw 139 based on the driving of the transport control motor 140 which is NC controlled.

### DESCRIPTION OF REFERENCE NUMERALS

- 1:: working apparatus
- 2:: glass plate
- 3:: carrying-in position
- 4:: scribing position
- 5:: removing position
- 6:: grinding position
- 7:: discharging position
- 8:: transporting device

## Claims

1. A glass plate working method comprising the steps of:
scribe forming on one surface of a glass plate a scribe groove line which is constituted by a closed curved and is directed in a thickness direction of the glass plate in such a manner as to be inclined toward an inner region of the closed curved; and
in a state in which an outer region of the closed curved on the glass plate is pressed from a side of the one surface of the glass plate, sucking and lifting the inner region of the closed curved on the glass plate from the side of the one surface of the glass plate to bend the glass plate in an upwardly protruding manner and allow a scribe groove to reach another surface of the glass plate, and removing the inner region of the scribe groove line.

2. The glass plate working method according to claim 1, wherein the lifting of the inner region of the closed curved on the glass plate from the one surface of the glass plate is effected by NC control.

3. A glass plate working apparatus comprising:
a cutter wheel for scribe forming on one surface of a glass plate a scribe groove line which is constituted by a closed curved and is directed in a thickness direction of the glass plate in such a manner as to be inclined toward an inner region of the closed curved;
a pressing mechanism for pressing an outer region of the closed curved on the glass plate from a side of the one surface of the glass plate; and
a removing mechanism for sucking and lifting the inner region of the closed curved on the glass plate from the side of the one surface of the glass plate to bend the glass plate in an upwardly protruding manner and allow a scribe groove to reach another surface of the glass plate, and removing the inner region of the scribe groove line.

4. The glass plate working apparatus according to claim 3, wherein said removing mechanism includes a suction pad for sucking the inner region of the scribe groove line and an NC controlled motor for effecting the lifting movement of the suction pad under NC control.
